# EUROPEAN PATENT SPECIFICATION

(11) **EP 2 285 525 B1**
(45) Date of publication and mention of the grant of the patent: **12.06.2013**
(21) Application number: 09727536.6
(22) Date of filing: 02.04.2009
(51) Int. Cl.: B23K 37/02

(54) **WELDING APPARATUS**
SCHWEISSGERÄT
APPAREIL DE SOUDAGE

(30) Priority: 03.04.2008 GB 0806049
(43) Date of publication of application: 23.02.2011
(73) Proprietor: IPWL Limited, Yorkshire BD20 7BX (GB)
(72) Inventor: WAINWRIGHT, Philip, Sean, Yorkshire BD20 8TY (GB); HOLT, Peter , Bateson, Yorkshire BD20 9DW (GB)
(74) Representative: Wilson, Peter
(86) International application number: PCT/GB2009/050328
(87) International publication number: WO 2009/122217

(56) References cited:
- EP-A- 1 854 578
- JP-A- 63 260 699
- JP-A- 2004 237 363
- NL-A- 7 604 184
- US-A- 3 176 587
- US-A1- 2003 047 585

## Description

The present invention relates generally to automated welding and more specifically to a pipe welding apparatus for supporting pipe welding or weld inspection equipment according to the preamble of claim 1 (see for example NL-A-7 604 184).

Pipelines for conveying oil, gas, water or the like are typically formed from a plurality of pipe sections joined together using known techniques, such as welding. It is known to manually weld the sections together using a welding torch. Alternatively, it is known to use a welding apparatus mounted on a moveable platform which follows a circumferential track attached around the outside of a pipe in the vicinity of where two pipe sections are to be welded. The track generally consists of a flat, relatively thin, guide band secured to the outer surface of one of the pipe sections to be welded. The apparatus generally consists of a motor-driven carriage on which the pipe welding or weld inspection equipment is mounted and the motor is coupled to the track. In operation, the apparatus uses the guide track to travel around the circumference of one of the pipes whilst continuously welding the pipe sections along a generally bevelled welding groove or joint.

Welding carriages or 'bugs' are generally used to join pipelines of different diameters. The diameter and curvature of the pipe sections to be welded often varies between fields and applications. Therefore, the size of the band must be changed to fit a different diameter of pipe section and a track engagement means for engaging the carriage with the track must be adjusted to fit the new band. A known type of welding carriage includes a drive wheel and three idler wheels. The wheels ensure the carriage is securely attached to the track and the drive wheel propels the carriage continuously along the track to move the carriage around the sections to be welded. For each job consisting of a different diameter of pipe section, the wheels must be adjusted to enable the carriage to engage with a track of smaller or larger diameter fitted to one of the pipe sections to be welded. For example, one job may involve welding two sections of pipe having a specific diameter whereas a subsequent job may involve welding two sections of pipe of relatively smaller or larger diameter to the previous job. Therefore, the carriage requires adjustment between jobs which is time consuming and results in increased setup time and costs. In addition, the carriage is susceptible to inadvertent adjustment during operation. This is particularly undesirable and requires the carriage to be continually checked to ensure it is moving along a track correctly. This requires time and is undesirably costly. Another disadvantage of known carriages is that they are adapted to couple with a corresponding track and where a track of different diameter is required for a larger or smaller pipe section, a new track of corresponding profile must be provided. This also leads to additional undesirable costs.

Therefore, it is desirable to provide a pipe welding or weld inspection apparatus which is capable of self-adjusting to a broad range of pipe section diameters and track profiles.

A first aspect of the present invention provides pipe welding apparatus mountable to and moveable along a track disposed around a pipe to be welded, comprising:
- a carriage;
- at least two spaced rear wheels each arranged to engage with a rear side of a track and at least two spaced front wheels each arranged to engage with a front side of a track;
- biasing means adapted to urge each rear wheel against a track;
- drive means coupled to at least one rear wheel for propelling the carriage along a track; and
- adjusting means for automatically adjusting the distance between corresponding wheels in a direction parallel to the track and in a lateral direction relative to the track when in use; characterised in that the apparatus further comprises a clamping assembly for selectively moving the rear wheels towards or away from the front wheels in a single operation to clamp or unclamp the apparatus to or from a track and which comprises the biasing means.

The automatic adjusting means advantageously allows corresponding wheels to self-adjust to engage with a range of tracks having different diameters, for example. As described above, a first job may require two sections of pipe to be welded together, each having a relatively large diameter and the apparatus must engage with a track of corresponding diameter fitted around one of the pipe sections. In a second job, the diameter of two pipe sections may be smaller compared to the first job, requiring a different track of corresponding diameter to be fitted and the apparatus to engage thereto. Known pipe welding apparatus must be manually adjusted between jobs involving different pipe section diameters to ensure the apparatus securely engages with the required track for a particular job. Conveniently, the present invention provides an apparatus which automatically adjusts to engage with a broad range of differently sized tracks and requires no manual adjustment between jobs comprising different pipe section diameters. This advantageously reduces the time required to set up a job and ensures costs are kept to a minimum. However, the apparatus is not limited to tracks having a diameter and may be used with a range of tracks having different forms, such as a linear track.

A track is fitted around a section of pipe in the vicinity of a joint between two neighbouring pipe sections to be welded and the track provides a means for the apparatus to propel itself around the section and also provides a means to guide a welding head, mounted on the carriage, along a joint line being welded.

The apparatus comprises at least two spaced rear wheels arranged to engage with a rear side of a track. At least two spaced front wheels are further provided and arranged to engage with a front side of a track.

At least one of the rear wheels is driven by suitable means, such as a motor, to propel the apparatus along a track. Suitably one or more of the front wheels may be driven.

Suitably the non-driven wheels may be free to rotate and may be idler wheels, for example. One or more of the idler wheels may be biased against a track to ensure a positive engagement is provided between the drive wheels and a track to securely couple the apparatus thereto.

Suitably a further idler wheel may be provided and arranged to engage with the rear side of the track. The idler wheel may suitably be biased against the rear side of the track to ensure at least one of the rear drive wheels is engaged with the track at any one time. The idler wheel thereby functions in a similar manner to a jockey wheel in a conveyor system. Alternatively or additionally one or more of the drive wheels may be biased against the track. An idler wheel and/or a rear drive wheel may be biased against the track by a spring, for example.

Suitably each wheel is attached to the carriage by an intermediate member. Suitably the intermediate member may be a leg having a first end attached to the carriage and a second end attached to a corresponding wheel. Suitably rear drive legs may attach the rear drive wheels to the carriage. The rear drive wheels are moveable relative to the carriage. The rear drive legs may be moveable relative to the carriage to provide at least the rear drive wheels with a degree of movement to allow them to continuously follow and positively engage with a track profile. Suitably the rear drive legs are slideably mounted to the carriage to allow the rear drive wheels to move laterally relative to the track. This, in combination with a biased idler wheel, advantageously ensures the rear drive wheels are positively engaged with the track if the track profile laterally changes along its length.

Suitably the first ends of the rear drive legs are slideably mounted to the carriage. Suitably the carriage comprises a slider assembly adapted to allow the rear drive legs to move laterally relative to a track. Suitably the slider assembly is adapted to receive the first ends of the rear drive legs and, optionally, a rear idler leg. The rear idler leg may be disposed between two drive legs. Suitably the slider assembly comprises a slider member having at least two spaced apertures each adapted to receive the first end of a rear drive leg. Suitably the apertures may be parallel elongate slots, orientated laterally relative to a track, to allow the rear drive legs to slideably move therein. Suitably each rear drive leg may comprise an outwardly extending protrusion which engages with a corresponding slot in the slider member, or vice versa. Alternatively, each drive leg may comprise a runner plate at its upper end which engages with an upper surface of the slider member to allow the legs to slide horizontally therein whilst being vertically constrained. The rear drive legs thereby extend from the carriage and suitably comprise means to secure them to the carriage whilst allowing them to slide laterally relative to the track.

The rear drive legs may be substantially square in cross section and may slide within rectangular slots of complimentary width. Suitably the slider assembly further comprises a slider plate arranged both sides of each rear drive leg to slideably engage with and move along a complimentarily-shaped channel in the slider member. The slider plates conveniently act as a form of linear bearing to allow the drive legs to slide relative to the carriage. Where an idler leg is disposed between two rear drive legs, the idler leg may be slideably mounted on the carriage by slider plates in a similar manner.

At least one drive wheel is rotated by drive means to thereby propel the carriage along a track. The drive means may suitably be mounted on the carriage and coupled to at least one front and/or rear drive wheel by a gear train. Suitably the drive means may be an electrical motor. Suitably the at least one drive wheel is attached to a free end of a drive shaft coupled to the motor *via* a gear train. Suitably the drive shaft may be disposed in a bore through its corresponding drive leg. The drive shaft may be suitably mounted in bearings. Suitably the drive shaft may be substantially vertically orientated in its substantially vertically orientated drive leg. The motor may be mounted on the carriage in any orientation and coupled to the drive shaft *via* a suitable gear train. Suitably the motor may be horizontally mounted on the carriage and may be coupled to the vertically orientated drive shaft by a worm/spur gear arrangement, for example. Alternatively, a horizontally mounted motor may be coupled to the vertically orientated drive shaft by a bevel gear arrangement.

Preferably the gear train and motor are slideably mounted to the carriage to allow them to move in the same direction as the at least one drive wheel and corresponding drive leg. Allowing the gear train and motor to move with a drive leg and corresponding drive wheel ensures minimum strain is subjected to a drive shaft and/or gear train assembly when the drive wheel, and leg, moves laterally relative to a track to compensate for any changes in track profile as the carriage moves there along, as described above. Suitably the gear train is housed in a gear housing. The gear housing may further house the motor. Suitably the gear housing is slideably mounted to the carriage and adapted to allow the gear train and motor to move laterally on the carriage relative to a track.

Suitably the drive means is coupled to at least two drive wheels *via* corresponding drive shafts. Suitably the at least two drive wheels are rear drive wheels.

The adjusting means is further adapted to automatically adjust the front wheels to allow the apparatus to be mounted to and move along a range of tracks of different diameter. Suitably the adjusting means allows the spacing between the front wheels to be either increased or decreased in accordance with a change of track diameter. For example, if two large pipe sections are to be welded and the apparatus is to securely mount and move along a track of similarly large diameter, the front wheels can self-adjust to accommodate the increase in distance required between them to ensure a positive engagement with the track. Where the apparatus must securely mount with a track of relatively smaller diameter, the front wheels may self-adjust towards each other to decrease the spacing between them to accommodate the reduced diameter of track.

Preferably the adjusting means comprises biasing means to urge the front wheels towards each other. Suitably the biasing means may comprise one or more springs.

Suitably each front wheel is mounted to the carriage by a front leg. The front legs may suitably extend vertically downwards from the carriage and have a corresponding front wheel attached to a free end. Each front wheel is suitably orientated in a horizontal plane to engage with the front side of a track. Each front wheel may be attached to its corresponding front leg by a pin extending vertically from the free end of the front leg. Suitably the pin may act as an axle for its corresponding front wheel. A bearing may be disposed between the pin and front wheel if required. Preferably the pin is pivotally mounted to the free end of its corresponding front leg. Suitably each front leg is adapted to allow its pin to swing about its pivotal mounting, in either direction along the track. Suitably each pin is pivotally mounted at or near one end and a front wheel is rotatably mounted at the other end. Suitably each pin is allowed to move in either direction about its pivot, in a direction parallel to the track, said movement defining an angle from the vertical. Suitably the angle of movement may be from 0 to 45 degrees relative to the vertical in either direction.

The front wheels can therefore move relative to each other in a direction substantially parallel to the track and the rear drive wheels, and optional idler wheel, are free to move in a direction substantially lateral to the track. The combination of these degrees of movement thereby allows the apparatus to self-adjust to tracks of different profile and diameter and securely couple the carriage with a track along which the apparatus moves. Conveniently the rear biasing means allows the position of the rear drive wheels to change, in a direction substantially lateral to a track, thereby to increase or decrease the distance between the front wheels and the rear drive wheels to accommodate a change in track width. The rear biasing means also urges the rear drive legs against the track to provide positive drive engagement and also effectively clamps the track between the front and rear wheels. The front biasing means conveniently provides the apparatus with means to self-adjust in a direction along the track in order to accommodate tracks of different diameter. The combination of these degrees of movement also desirably prevents the front and rear wheels binding against the track during propulsion of the carriage along the track.

Suitably the front and rear wheels may have a profile which corresponds to the front and rear edge of a track thereby to provide adequate engagement therewith. Suitably the front and rear wheels may comprise an upper annular shoulder which is adapted to run along the top of the track to prevent the wheels falling from the track. Suitably the front and rear wheels may further comprise a lower annular shoulder thereby to define an annular groove around each wheel which engages with and runs along a track edge.

The apparatus further comprises a clamping assembly to securely clamp the carriage to a track. Preferably the clamping assembly is coupled to one or both of the front and rear wheels. The clamping assembly allows the rear wheels to be selectively moved towards the front wheels, or vice versa, to securely clamp a track therebetween and the carriage to a track. The clamping assembly may comprise a handle which is actuated to move the rear wheels towards or away from the front wheels, or vice versa, to clamp or unclamp the carriage to or from a track. Suitably the handle may comprise a lever which is actuated at or near a first end and coupled to the rear wheels at or near a second end. Suitably the lever is pivotally mounted to the carriage near the second end thereby to provide a mechanical advantage at the second end. The second end of the lever may engage with at least one guide pin slideably mounted on the carriage and coupled with the rear wheels. Actuating the lever to engage with the guide pin may suitably move the rear wheels towards or away from the front wheels, thereby to clamp or unclamp the carriage to/from the track.

The clamping assembly comprises the biasing means to urge the rear wheels away from the front wheels. The biasing means transfers a clamping load from the lever to the rear drive wheels whilst allowing the rear drive wheels to self-adjust, as described above. Suitably the at least one guide pin may be two spaced guide pins slideably mounted to the carriage by at least one guide member. Preferably a guide member is attached to the carriage at each end of the guide pins to provide adequate support and guidance. Preferably the guide members are attached to the underside of the carriage and at least one of the guide pins is coupled to each of the rear drive legs.

Preferably the rear drive legs and the rear idler leg are coupled to both of the guide pins. Suitably the rear drive legs and rear idler leg may be coupled to the guide pins by a coupling member. The coupling member may be attached to the guide pins to move therewith and coupled to the rear drive legs and rear idler leg. To allow for the self-adjustment of the rear drive legs and rear idler leg whilst the carriage moves along a track, suitably the biasing means of the clamping assembly may be disposed between the rear drive legs and rear idler leg and the coupling member. Suitably the rear drive legs and rear idler leg are each coupled to the coupling member by a coupling pin. Suitably the biasing means comprises a spring mounted on each coupling pin to engage with the coupling member. Preferably the springs are compression springs which provide a degree of resilience to move the rear drive wheels and rear idler wheel towards the front wheels to clamp a track therebetween whilst also providing the rear drive wheels and rear idler wheel some degree of movement away from the front wheels to allow the same to self-adjust during movement along a track. Suitably the coupling pins are slideably engaged with the coupling member and a first end of each coupling pin is attached to one of the corresponding rear drive legs or rear idler leg. Suitably a second end of each coupling pin comprises a head portion with which its corresponding compression spring engages.

Suitably each coupling pin may be a bolt comprising a screw thread at the first end and the head portion at the second end. Each coupling pin may screw into a corresponding rear drive leg or rear idler leg. The head portion of each pin may comprise a slot, for example, to allow a suitable tool such as a screw driver to engage with and rotate the coupling pin to move the head portion towards or away from the coupling member, thereby to change the length of the spring engaged therewith. Changing the length of each spring will change the spring force acting on the corresponding rear drive leg or rear idler leg and thereby the clamping force on the track and the degree of allowable adjustment of the rear drive legs and/or rear idler leg during movement along the track. Of course, other suitable arrangements of clamping assemblies may be used to clamp a track between the front and rear wheels whilst allowing at least the rear wheels a degree of self-adjustment.

The apparatus is therefore adapted to automatically adjust to a range of differently sized tracks. Unlike known welding carriages or 'bugs' which must be manually adjusted to fit different tracks, which are specific to the carriage itself, the apparatus according to the present invention is adapted to fit a range of pre-existing tracks currently in operation for the use in pipeline welding. Advantageously new tracks are not required for different jobs comprising tracks of different size and therefore associated costs are kept to a minimum.

Suitable pipe welding or weld inspection apparatus may be mounted on the carriage. Alternatively a suitable platform may be mounted to the carriage on which pipe welding or weld inspection apparatus may be mounted. Suitably the platform is mounted to and elevated above the carriage to define a space there between. Conveniently the gear train and motor may be disposed between the carriage and the platform. Suitably the platform may be mounted to the carriage by one or more support mounts. The support mounts may include posts, brackets or plates which mount and elevate the platform above the carriage. The support mounts may completely or partially surround the gear train and motor.

Suitable materials may be used, including aluminium, to ensure the overall weight of the apparatus is kept to a minimum.

Suitably the apparatus comprises a control system which may be disposed on the apparatus or remote from the apparatus. The control system may be disposed on the apparatus and controlled remotely *via* a remote control. Communication means between the control system and remote control may be wired or wireless. Suitably the control system is operatively associated with the drive means and suitable welding equipment mounted to the apparatus to efficiently control the speed of the apparatus, and welding equipment thereon, along a track, and a joint to be welded, in accordance with desired weld parameters.

A further aspect of the present invention is to provide a database operatively associated with said control system wherein the database comprises weld parameters accessible to and selectable by a user in accordance with the desired weld and joint to be welded. It is known for a user, such as a contractor, to obtain the weld parameters from a qualified weld supervisor who is generally contracted in especially to design the operating parameters for the desired weld. This is undesirably costly and time consuming as the weld parameters must be designed, certified and instated. In addition, the weld supervisor is generally a sub-contractor who owns any intellectual property rights in the weld parameters and who is free to walk from the job, with the parameters, at any time. This can severely delay a pipeline project which can be extremely detrimental to the overall cost of the project.

Suitably a user has, or can gain, access to the database which comprises pre-tested and ready-to-instate weld parameters. The desired weld parameters can be selected from the database to be operatively associated with the control system. This eliminates the need for a third party, such as a weld supervisor, to be sub-contracted in to specifically design the desired weld parameters and the risk of severe delay to the project. The user would also save on testing costs prior to certification because the weld parameters in the database are pre-tested.

A further aspect of the present invention provides a welding system comprising a welding apparatus as herein above described and at least one track. The track may take any form to guide the apparatus along a joint to be welded. For example, the track may be linear or may be continuously circular and adapted to fit around a section of pipe to be welded, for example. As such, the apparatus is not limited to tracks having a diameter and the present invention may be used with a range of tracks having different forms.

An embodiment of the present invention will now be described, by way of example only, in accordance with the accompanying drawings, in which:
- Figure 1 shows the rear of the apparatus;
- Figure 2 shows the front of the apparatus of Figure 1;
- Figure 3 shows the underside of the apparatus of Figure 1;
- Figure 4 shows the rear drive legs and idler leg in the slider assembly;
- Figure 5 shows the slider plates and slider member of the slider assembly of Figure 4;
- Figure 6 shows the clamping assembly;
- Figure 7 shows the rear drive shafts and drive wheels; and
- Figure 8 shows the gear train to couple the rear drive shafts with the motor.

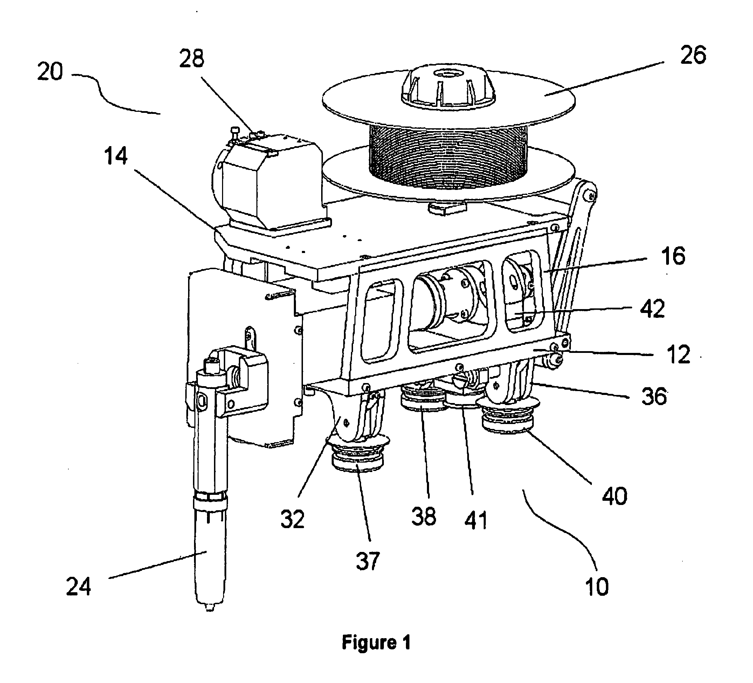

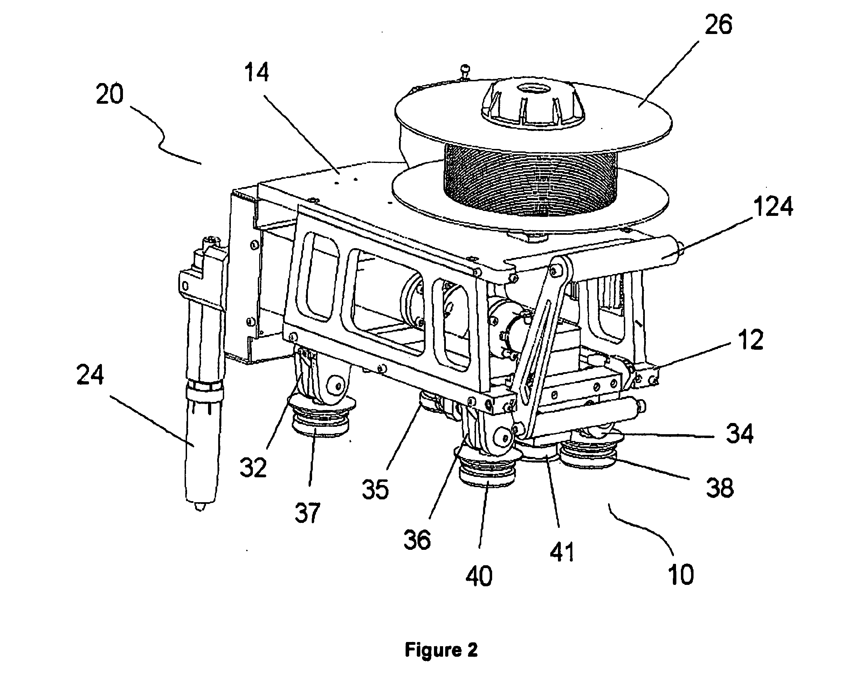

As shown in Figures 1 and 2, the apparatus 10 comprises a carriage 12 and a platform 14 which is attached in space relationship thereon by two lateral support mounts 16, 18. The platform 14 is suitable for mounting welding or weld inspection equipment 20 on. As shown, suitable welding equipment 20 generally comprises a weld head 24, a weld wire spool 26 and a weld wire feeder mechanism 28 for controlled feeding of the weld wire from the spool 26 to the weld head 24. Suitable welding equipment 20 may include MIG (Metal Inert Gas) or SAW (Submerged Arc Welding) welding apparatus, for example. However, equipment other than welding equipment, such as weld inspection equipment, which requires moving along or around a track, may be mounted on the platform 14.

The carriage 12 is adapted to couple with and move along a track which is fitted on or around a work piece to be welded, such as one of two pipe sections to be welded together. A flat, generally thin track is typically fitted around one of the sections to be joined in the vicinity of the joint to be welded. The track provides a means to guide the apparatus around the joint and also provides means for the apparatus to propel itself around the joint during welding or around a weld during inspection.

The apparatus 10 is provided with two front legs 30, 32 and two rear drive legs 34, 36 which downwardly extend from the carriage 12. To engage the carriage 12 with a track, two rear drive wheels 38, 40 are provided on the free ends of the rear drive legs 34, 36 and two front wheels 35, 37 are provided on the free ends of the front legs 30, 32. The front and rear wheels 35, 37 each comprise two annular shoulders to define an annular groove around each wheel. The front and rear grooved wheels are horizontally orientated and engage securely with the front and rear sides of a track, in a similar manner to a pulley wheel and a V-belt.

The rear drive wheels 38, 40 are driven by a motor 42 which is coupled thereto by a gear train housed in a gear housing. The motor 42 and gear housing are mounted on the carriage 12 and under the platform 14. The rear drive wheels 38, 40 are rotated in the same direction and engage with the rear edge of a track fitted around a pipe section, to thereby propel the apparatus 10 along the track and around a joint to be welded or weld to be inspected.

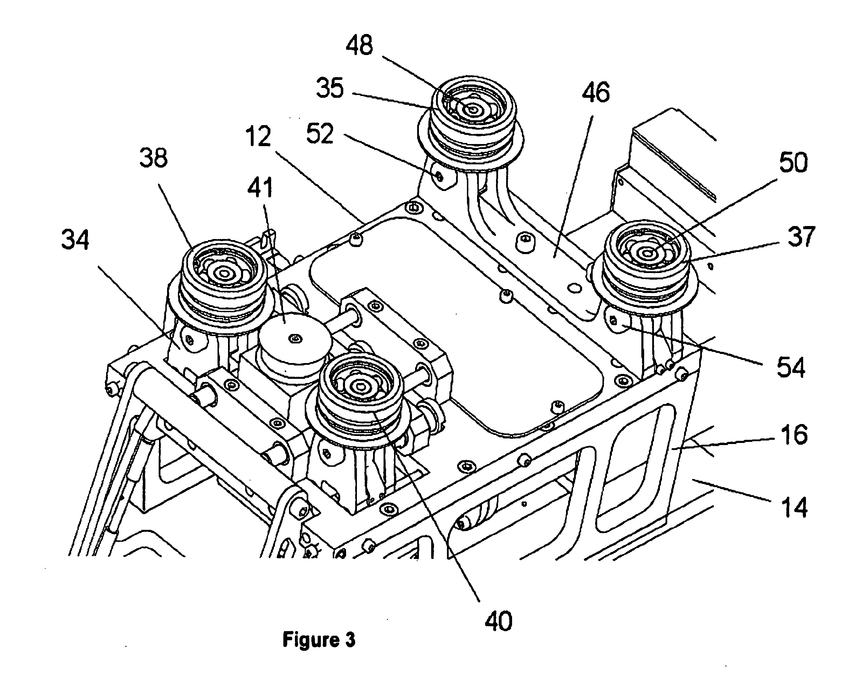

As shown in Figure 3, the front legs 30, 32 are part of a front leg assembly 46 which is mounted on the underside of the carriage 12. Front wheels 35, 37 are mounted on pins 48, 50 and horizontally orientated to engage with the front edge of a track running between the front legs 30, 32 and rear drive legs 34, 36. The rear drive legs 34, 36 are mounted on the opposite side of the underside of the carriage 12 so the rear wheels 38, 40 engage with the rear edge of a track. The front legs 30, 32 and rear legs 34, 36 provide the carriage 12 with support and stability when mounted on and moving along a track.

Each of the front wheels 35, 37 are rotatably mounted to the front leg assembly 46 by the pins 48, 50. The pins 48, 50 are threaded to receive corresponding nuts to securely attach the front wheels 35, 37 thereto. The front leg assembly 46 may also comprise bearings on the pins 48, 50 if required. The pins 48, 50 are pivotally attached to their corresponding front legs 30, 32 by bolts 52, 54. The front legs 30, 32 both comprise slots which are adapted to receive an end of a corresponding pin 48, 50 and to allow a degree of movement of the pin 48, 50 about the axis of its corresponding bolt 52, 54. The pins 48, 50 are free to swing in either direction along a linear path which is parallel to the track and the direction in which the carriage moves. The pins 48, 50 are biased toward each other by suitable means, such as springs. Such springs may engage with either the pins 48, 50 or bolts 52, 54 to urge the pins 48, 50 towards each other. This degree of movement allows the front wheels (not shown) to move away from or towards each other, thereby increasing or decreasing their spacing, to accommodate a change in track diameter. For example, if two large pipe sections are to be welded and the apparatus is to securely mount and move along a track of similarly large diameter, the front wheels can self-adjust to accommodate the increase in distance required between them to ensure a positive engagement with the track. Where the apparatus 10 must securely mount with a track of smaller diameter, the front wheels may self-adjust towards each other to decrease the spacing between them to accommodate the reduced diameter of track.

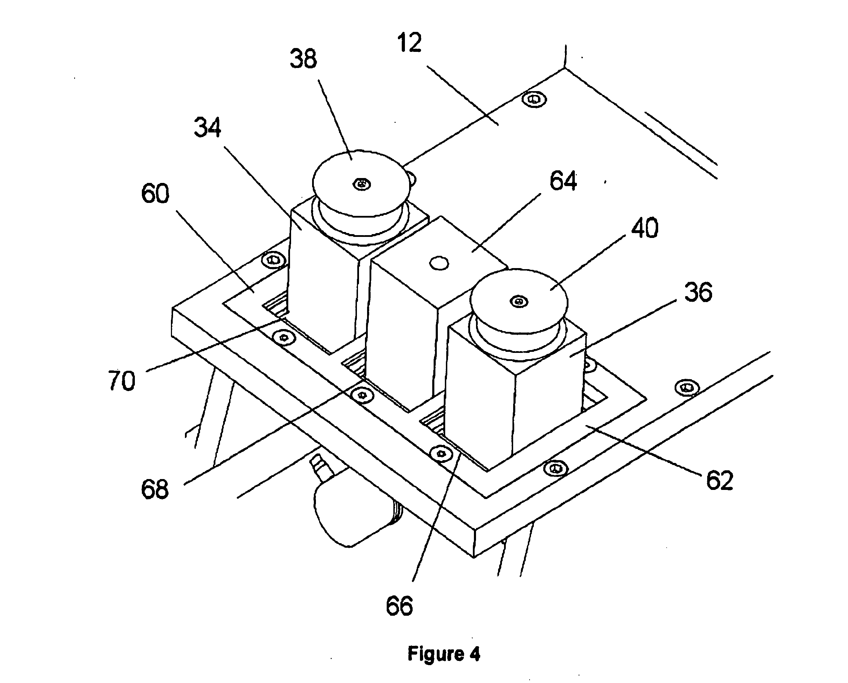

As shown in Figure 4, the rear drive legs 34, 36 are slideably mounted to the carriage 12 in a slider assembly 60. The slider assembly 60 comprises a slider member 62 having three rectangular apertures 66, 68, 70. The two rear drive legs 34, 36 are substantially square in cross section and are slideably mounted in the outer apertures 66, 70. An optional idler leg 64 may be provided between the two drive legs 34, 36 and slideably mounted in the middle aperture 68. The idler leg 64 has an idler wheel (not shown) rotatably mounted to its free end which engages to the rear edge of a track in a similar manner to the rear drive wheels 38, 40. The idler leg 64 is allowed to move in the same direction as the two neighbouring rear drive legs 34, 36 and is biased towards the track by suitable idler biasing means, such as a spring (not shown). The idler biasing means ensures the idler wheel is urged against the rear side of a track. The idler leg 64 is coupled to the two rear drive legs 34, 36 and thereby urges the rear drive wheels 38, 40 against the track. The slider assembly 60 permits this movement. The idler leg 64 ensures at least one rear drive wheel 38, 40 is positively engaged with the track at any one time to prevent the apparatus losing propulsion along the track. A loss in propulsion along the track will have a detrimental effect on the controlled speed of the apparatus along the track and therefore to the weld quality, for example.

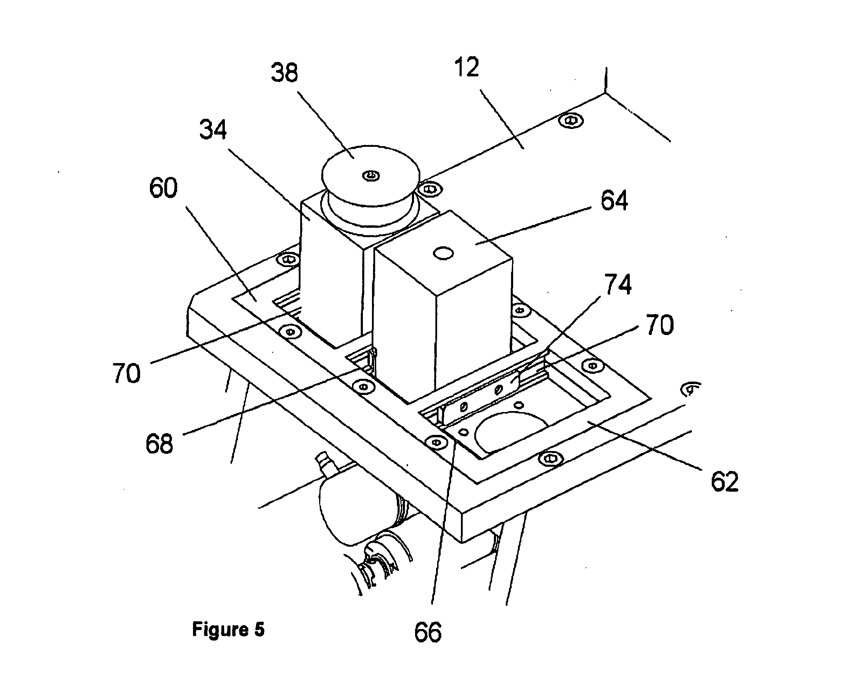

As shown in Figure 5, the slider member 62 comprises elongate channels 72 disposed on adjacent sides of each aperture 66, 68, 70. Complimentarily shaped slider plates 74 engage with each channel 72 and slide along their corresponding channel 72. Two slider plates 74 are attached to a distal end of each of the rear drive legs 34, 36 and the idler leg 64, relative to their corresponding wheels 38, 40. The slider assembly 60 comprising the slider member 62 and slider plates 74 allow the rear drive legs 34, 36 and idler leg 64 to move laterally on the carriage 12, relative to a track. Conveniently the slider assembly 60 allows the position of the rear drive legs 34, 36 and wheels 38, 40 to change, in a direction lateral to a track, thereby to increase or decrease the distance between the front wheels and the rear drive wheels 38, 40 to accommodate a change in track width. The width of a track may be relatively narrow for pipe sections of smaller diameter and relatively wide for sections of pipe having a large diameter, for example. The idler leg 64 urges the rear drive legs 34, 36 against the track to provide positive drive engagement and also effectively clamps the track between the front wheels and rear wheels 38, 40 for secure engagement of the apparatus 10 thereto.

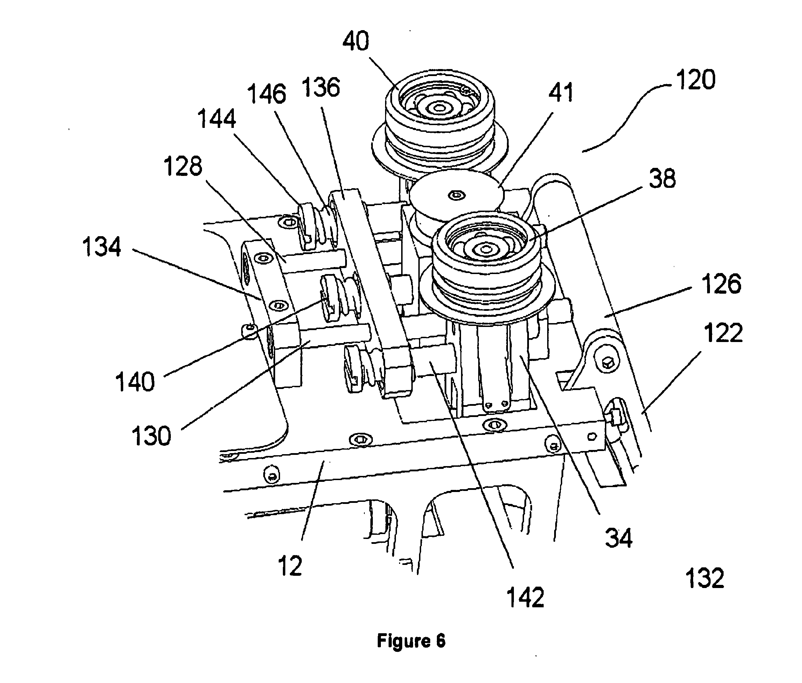

As shown in Figure 6, the apparatus includes a clamping assembly 120 to securely clamp the carriage 12 to a track. The clamping assembly 120 allows the rear wheels 38, 40, 41 to be selectively moved towards the front wheels to securely clamp a track therebetween and the carriage 12 to a track. The clamping assembly 120 has a handle 122 which is actuated to move the rear wheels 38, 40, 41 towards or away from the front wheels to clamp or unclamp the carriage 12 to or from a track. The handle 122 is actuated at a first end 124 and coupled to the rear wheels 38, 40, 41 at a second end 126. The handle 122 is pivotally mounted to the carriage 12 near the second end 126. The second end 126 of the handle 122 engages with two guide pins 128, 130 slideably mounted on the carriage 12 in two guide members 132, 134. The guide pins 128, 130 are coupled to the rear wheels 38, 40, 41 by a coupling member 136 attached to the guide pins 128, 130 and three coupling pins 138, 140, 142 attached to the rear drive legs 34, 36 and rear idler leg 64. The coupling pins 138, 140, 142 are slideably mounted to the coupling member 136 and each has a head portion 144 which engages with a compression spring 146 disposed between the head portion 144 and the coupling member 136. The springs 146 urge the rear wheels 38, 40, 41 towards the front wheels to clamp a track therebetween and the carriage 12 to the track whilst allowing self-adjustment of the rear wheels 38, 40, 41 during movement along the track. Each coupling pin 138, 140, 142 is a bolt comprising a screw thread at one end and the head portion 144 at the other end. Each coupling pin 138, 140, 142 screws into its corresponding rear drive leg 34, 36 or rear idler leg 64. The head portion 144 of each pin has a slot to allow a suitable tool such as a screw driver to engage therewith and rotate the coupling pin 138, 140, 142 to move the head portion 144 towards or away from the coupling member 136, thereby to change the length of the spring 146 engaged therewith. Changing the length of each spring 146 will change the spring force acting on the corresponding rear drive leg 34, 36 or rear idler leg 64 and thereby the clamping force on the track and the degree of allowable adjustment of the rear drive legs 34, 36 and/or rear idler leg 64 during movement along the track.

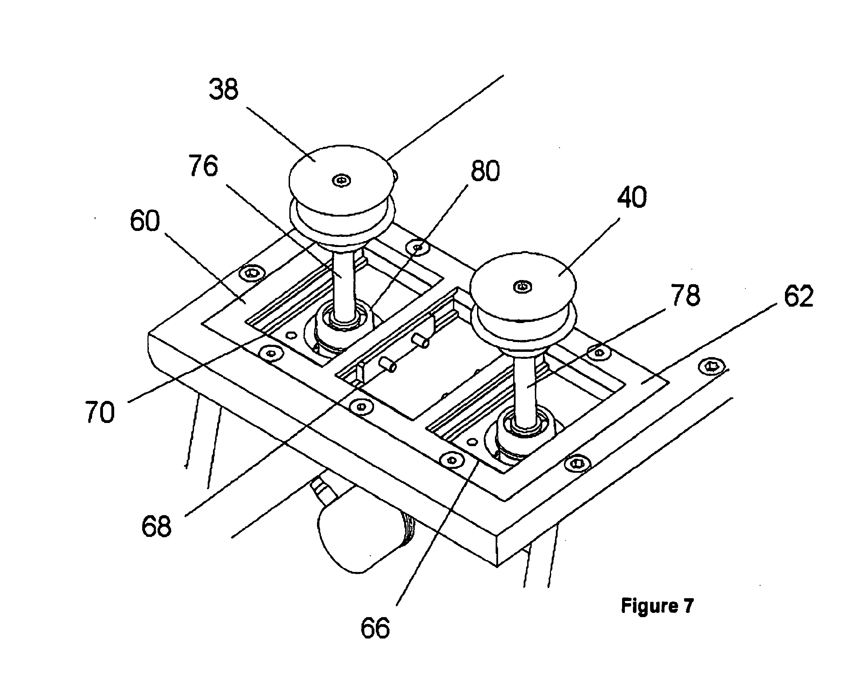

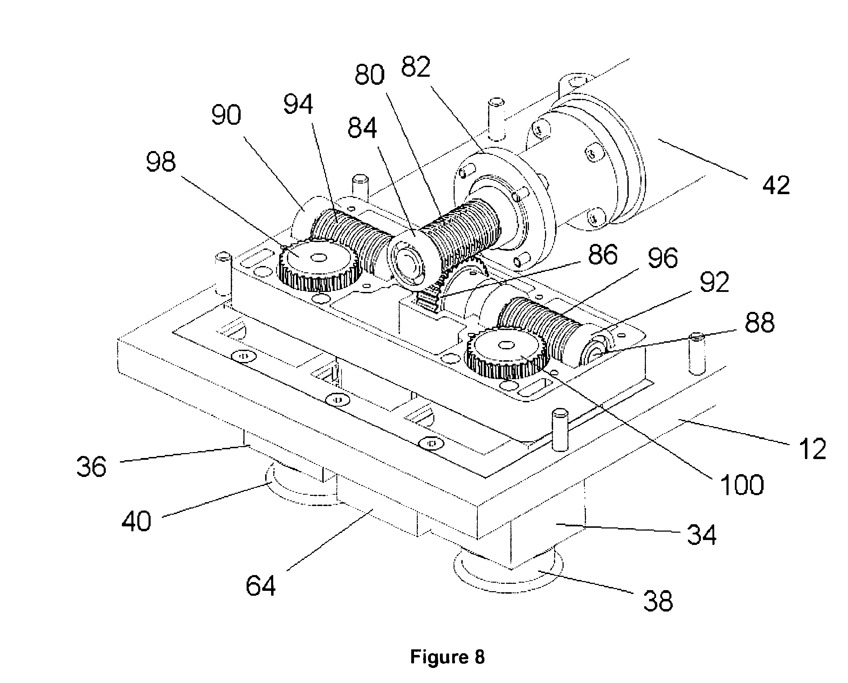

As shown in Figures 7 and 8, the motor 42 is coupled by a gear train to first and second rear drive shafts 76, 78, each mounted in bearings 80, 82 and comprising one of the rear drive wheels 38, 40 attached thereto at a free end. The motor 42 and gear train are slideably mounted on the carriage 12 to allow them to move with the rear drive legs 34, 36 in a lateral direction relative to a track. This reduces strain on the drive shafts 76, 78 and/or gear train during operation. The gear train comprises a first worm gear 80 attached to a motor shaft 82 and mounted in a bearing 84. The first worm gear 80 engages with a first spur gear 86 mounted centrally on a main draft shaft 88 mounted in bearings 90, 92. Second worm gears 94, 96 are mounted to the main drive shaft 88 on both sides of the first spur gear 86. The second worm gears 94, 96 engage with second spur gears 98, 100 mounted to the rear drive shafts 76, 78. This gear arrangement ensures the rear draft shafts 76, 78 and their drive wheels 38, 40 are driven and rotated by the motor 42 at the same speed and in the same direction to controllably propel the apparatus 10 along a track.

The motor 42 is operatively associated with a control system to control the speed of the motor 42 thereby to move the apparatus 10 along a joint to be welded, or inspected, in accordance with desired weld parameters. The speed of weld wire being delivered to a weld head 24 from a weld wire spool 26 by a weld wire feeder mechanism 28 may also be controlled by the control system. The control system may be mounted on the apparatus 10 or may be remote from the apparatus 10. Desired weld parameters may be selected by a user from a database comprising a plurality of pre-tested weld parameters, as described above. Advantageously, the need for a third party, such as a weld supervisor, to specifically design and test the desired weld parameters is eliminated and the risk of a third party leaving a project resulting in severe delay to the project is minimised. The user would also save on testing costs prior to certification because the weld parameters in the database are pre-tested.

A plurality of tracks may be provided with the apparatus 10, such tracks being suitable to fit around a broad range of pipe section diameters. The apparatus 10 may also, or alternatively, be provided with suitable pipe welding or weld inspection apparatus. As described above, the apparatus 10 is not limited to tracks having a diameter and the present invention may be used with a range of tracks having different forms.

## Claims

1. A pipe welding apparatus (10) mountable to and moveable along a track disposed around a pipe to be welded, comprising:
- a carriage (12);
- at least two spaced rear wheels (38,40) each arranged to engage with a rear side of a track and at least two spaced front wheels (35, 37) each arranged to engage with a front side of a track;
- biasing means (146) adapted to urge each rear wheel against a track;
- drive means (42) coupled to at least one rear wheel (38,40) for propelling the carriage along a track; and
- adjusting means for automatically adjusting the distance between corresponding wheels (35,37,38,40) in a direction parallel to the track and in a lateral direction relative to the track when in use; **characterised in that** the apparatus further comprises a clamping assembly (120) for selectively moving the rear wheels towards or away from the front wheels in a single operation to clamp or unclamp the apparatus to or from a track and which comprises the biasing means (146).

2. An apparatus according to claim 1, wherein the rear wheels comprise at least one idler wheel (41) biased against the rear side of the track to ensure at least one of the rear wheels (38,40) is engaged with the track at any one time.

3. An apparatus according to claim 1 or 2, wherein the rear drive wheels (38,40) are attached to the carriage by rear drive legs (34,36) slideably mounted to the carriage (12) to allow the rear drive wheels (38, 40) to move laterally relative to the track.

4. An apparatus according to claim 3, wherein the carriage (12) comprises a slider assembly (60) adapted to allow the rear drive legs (34,36) to move laterally relative to a track.

5. An apparatus according to any preceding claim, wherein the drive means (42) is mounted on the carriage (12) and coupled to a rear drive wheel (38,40) by a gear train.

6. An apparatus according to any preceding claim, wherein the drive means (42) is an electrical motor.

7. An apparatus according to claims 5 or 6, wherein the gear train and drive means (42) are slideably mounted to the carriage to allow them to move in the same direction as the at least one drive wheel (38,40) and corresponding drive leg (34,36).

8. An apparatus according to any preceding claim, wherein the biasing means (146) comprises one or more springs.

9. An apparatus according to any preceding claim, wherein the clamping assembly (120) comprises adjusting means to selectively adjust a biasing force applied by the biasing means to each of the rear wheels.

10. An apparatus according to any preceding claim, comprising a control system operatively associated with the drive means and suitable welding equipment mounted to the apparatus.

11. An apparatus according to claim 10, wherein a database containing at least weld parameters accessible to and selectable by a user in accordance with a desired weld and joint to be welded is operatively associated with the control system.

12. A welding system comprising a welding apparatus according to any one of claims 1 to 11 and at least one track.

## Patentansprüche

1. Ein Rohrschweißgerät (10), das an eine Bahn, welche um ein zu schweißendes Rohr angeordnet ist, montiert und entlang dieser bewegt werden kann, das Folgendes beinhaltet:
- einen Fahrwagen (12);
- mindestens zwei mit Abstand voneinander angeordnete Hinterräder (38, 40), die jeweils eingerichtet sind, um in eine Hinterseite einer Bahn einzugreifen, und mindestens zwei mit Abstand voneinander angeordnete Vorderräder (35, 37), die jeweils eingerichtet sind, um in eine Vorderseite einer Bahn einzugreifen;
- ein Vorspannmittel (146), das angepasst ist, um jedes Hinterrad gegen eine Bahn zu drängen;
- ein Antriebsmittel (42), das an mindestens ein Hinterrad (38, 40) gekoppelt ist, zum Vorwärtstreiben des Fahrwagens entlang einer Bahn; und
- ein Einstellmittel zum automatischen Einstellen des Abstands zwischen entsprechenden Rädern (35, 37, 38, 40) in einer Richtung parallel zu der Bahn und in einer Querrichtung relativ zu der Bahn, wenn in Verwendung;
**dadurch gekennzeichnet, dass** das Gerät ferner eine Klemmanordnung (120) zum selektiven Bewegen der Hinterräder zu den Vorderrädern hin oder von diesen weg in einer einzigen Operation beinhaltet, um das Gerät an eine Bahn zu klemmen oder von dieser zu lösen, und welche das Vorspannmittel (146) beinhaltet.

2. Gerät gemäß Anspruch 1, wobei die Hinterräder mindestens ein Zwischenrad (41) beinhalten, das gegen die Hinterseite der Bahn vorgespannt ist, um sicherzustellen, dass zu jedem Zeitpunkt mindestens eines der Hinterräder (38, 40) in die Bahn eingreift.

3. Gerät gemäß Anspruch 1 oder 2, wobei die Hinterantriebsräder (38, 40) durch Hinterantriebsfüße (34, 36), die gleitfähig an dem Fahrwagen (12) montiert sind, an dem Fahrwagen angebracht sind, um den Hinterantriebsrädern (38, 40) zu ermöglichen, sich quer relativ zu der Bahn zu bewegen.

4. Gerät gemäß Anspruch 3, wobei der Fahrwagen (12) eine Gleitanordnung (60) beinhaltet, die angepasst ist, um den Hinterantriebsfüßen (34, 36) zu ermöglichen, sich quer relativ zu einer Bahn zu bewegen.

5. Gerät gemäß einem der vorhergehenden Ansprüche, wobei das Antriebsmittel (42) auf dem Fahrwagen (12) montiert und durch einen Getriebezug an ein Hinterantriebsrad (38, 40) gekoppelt ist.

6. Gerät gemäß einem der vorhergehenden Ansprüche, wobei das Antriebsmittel (42) ein elektrischer Motor ist.

7. Gerät gemäß Anspruch 5 oder 6, wobei der Getriebezug und das Antriebsmittel (42) gleitfähig an dem Fahrwagen montiert sind, um ihnen zu ermöglichen, sich in derselben Richtung wie das mindestens eine Antriebsrad (38, 40) und der entsprechende Antriebsfuß (34, 36) zu bewegen.

8. Gerät gemäß einem der vorhergehenden Ansprüche, wobei das Vorspannmittel (146) eine oder mehrere Federn beinhaltet.

9. Gerät gemäß einem der vorhergehenden Ansprüche, wobei die Klemmanordnung (120) ein Einstellmittel beinhaltet, um eine durch das Vorspannmittel auf jedes der Hinterräder ausgeübte Vorspannkraft selektiv einzustellen.

10. Gerät gemäß einem der vorhergehenden Ansprüche, das ein Steuersystem beinhaltet, das mit dem Antriebsmittel und geeigneten Schweißeinrichtungen, die an dem Gerät montiert sind, operativ in Verbindung steht.

11. Gerät gemäß Anspruch 10, wobei eine Datenbank, die mindestens Schweißparameter enthält, auf die ein Benutzer zugreifen und diese auswählen kann, gemäß einer gewünschten Schweißung und zu schweißenden Naht, mit dem Steuersystem operativ in Verbindung steht.

12. Ein Schweißsystem, das ein Schweißgerät gemäß einem der Ansprüche 1 bis 11 und mindestens eine Bahn beinhaltet.

## Revendications

1. Un appareil de soudage de tubes (10) pouvant être monté sur et se déplacer le long d'un rail disposé autour d'un tube devant être soudé, comprenant :
- un chariot (12) ;
- au moins deux roues arrière espacées (38, 40) arrangées chacune pour se mettre en prise avec un côté arrière d'un rail et au moins deux roues avant espacées (35, 37) arrangées chacune pour se mettre en prise avec un côté avant d'un rail ;
- un moyen de sollicitation (146) conçu pour pousser chaque roue arrière contre un rail ;
- un moyen d'entraînement (42) couplé à au moins une roue arrière (38, 40) pour propulser le chariot le long d'un rail ; et
- un moyen de réglage pour régler automatiquement la distance entre des roues correspondantes (35, 37, 38, 40) dans une direction parallèle au rail et dans une direction latérale par rapport au rail pendant l'utilisation ;
**caractérisé en ce que** l'appareil comprend en outre un ensemble de serrage (120) pour, de manière sélective, rapprocher ou éloigner les roues arrière des roues avant en une seule opération afin de serrer l'appareil sur un rail ou de l'en desserrer et qui comprend le moyen de sollicitation (146).

2. Un appareil selon la revendication 1, dans lequel les roues arrière comprennent au moins une roue intermédiaire (41) sollicitée contre le côté arrière du rail pour garantir qu'au moins une des roues arrière (38, 40) soit en prise avec le rail à tout instant.

3. Un appareil selon la revendication 1 ou la revendication 2, dans lequel les roues d'entraînement arrière (38, 40) sont attachées au chariot grâce à des pattes d'entraînement arrière (34, 36) montées de manière à pouvoir glisser sur le chariot (12) afin de permettre aux roues d'entraînement arrière (38, 40) de se déplacer latéralement par rapport au rail.

4. Un appareil selon la revendication 3, dans lequel le chariot (12) comprend un ensemble formant glissière (60) conçu pour permettre aux pattes d'entraînement arrière (34, 36) de se déplacer latéralement par rapport à un rail.

5. Un appareil selon n'importe quelle revendication précédente, dans lequel le moyen d'entraînement (42) est monté sur le chariot (12) et couplé à une roue d'entraînement arrière (38, 40) grâce à un train d'engrenages.

6. Un appareil selon n'importe quelle revendication précédente, dans lequel le moyen d'entraînement (42) est un moteur électrique.

7. Un appareil selon les revendications 5 ou 6, dans lequel le train d'engrenages et le moyen d'entraînement (42) sont montés de manière à pouvoir glisser sur le chariot afin de leur permettre de se déplacer dans la même direction que l'au moins une roue d'entraînement (38, 40) et patte d'entraînement correspondante (34, 36).

8. Un appareil selon n'importe quelle revendication précédente, dans lequel le moyen de sollicitation (146) comprend un ou plusieurs ressorts.

9. Un appareil selon n'importe quelle revendication précédente, dans lequel l'ensemble de serrage (120) comprend un moyen de réglage pour régler de manière sélective une force de sollicitation appliquée par le moyen de sollicitation sur chacune des roues arrière.

10. Un appareil selon n'importe quelle revendication précédente, comprenant un système de contrôle associé de manière opérationnelle avec le moyen d'entraînement et un équipement de soudage adéquat monté sur l'appareil.

11. Un appareil selon la revendication 10, dans lequel une base de données contenant au moins des paramètres de soudure accessibles à et sélectionnables par un utilisateur conformément à une soudure souhaitée et à un joint à souder est associée de manière opérationnelle avec le système de contrôle.

12. Un système de soudage comprenant un appareil de soudage selon l'une quelconque des revendications 1 à 11 et au moins un rail.
